Europäisches Patentamt

European Patent Office

Office européen des brevets

(11) Publication number: **0 127 913**
**B1**

# EUROPEAN PATENT SPECIFICATION

(45) Date of publication of patent specification: **18.03.87**

(21) Application number: **84200635.5**

(22) Date of filing: **04.05.84**

(51) Int. Cl.⁴: **G 03 B 27/80**

(54) Reproduction camera.

(30) Priority: **26.05.83 NL 8301858**

(43) Date of publication of application:
**12.12.84 Bulletin 84/50**

(45) Publication of the grant of the patent:
**18.03.87 Bulletin 87/12**

(84) Designated Contracting States:
**DE FR GB NL**

(56) References cited:
**CH-A- 483 034**
**CH-A- 541 823**
**GB-A-2 096 336**

(73) Proprietor: **HELIOPRINT A/S**
**16 Munkegaardsvej**
**DK-3490 Kvistgaard (DK)**

(72) Inventor: **Andersen, Steen**
**16, Syrenhaven**
**DK-3450 Allerod (DK)**

(74) Representative: **Carpmael, John William Maurice et al**
**CARPMAELS & RANSFORD 43 Bloomsbury Square**
**London, WC1A 2RA (GB)**

Courier Press, Leamington Spa, England.

## Description

This invention relates to a reproduction camera for the production of contact screen prints from an original, said camera being provided with a platen for a contact screen and a light-sensitive material, an optical system for projecting an image of the original onto the light-sensitive material, means for exposing the light-sensitive material, the exposure consisting at least of an imagewise main exposure through the contact screen and a non-imagewise additional exposure through the contact screen, and a computer which determines a dosage for the various exposures.

A device of this kind is already known. After feeding in the maximum and minimum optical density of the original the computer determines the times for the various exposures.

Stray light, however, occurs in any optical imaging operation. This is caused by reflection and diffusion of the light at the lens surfaces of the objective and also by reflections at the camera walls. An original which has largely light surfaces will reflect a considerable amount of light to the lens and thus also produce a considerable amount of stray light. A dark original, on the other hand, will reflect little light to the lens and thus also produce little stray light. Stray light can be regarded as a uniform non-imagewise additional exposure which the light-sensitive material additionally receives during the main exposure.

Reproduction cameras of the known type do not allow for compensation of this stray light which differs according to the original, and it is practically impossible to determine the correct exposures.

The object of this invention, therefore, is to provide a reproduction camera without this disadvantage.

According to the invention, this is achieved in that in a reproduction camera of the kind referred to hereinabove a sensor is provided which generates a signal proportional to the light reflected by the original as a whole, and in that the computer is connected to the sensor and comprises means which convert the sensor signal into a second signal used to influence the non-imagewise additional exposure through the contact screen to compensate for stray light.

In a preferred embodiment of the invention, the second signal is used to influence the exposure time of the non-imagewise additional exposure through the contact screen.

Other features and advantages of the invention will be apparent from the following description with reference to the accompanying drawings wherein:

Fig. 1 represents a graph in which the contrast range of an original is greater than the basic screen range of the screen and

Fig. 2 schematically represents a computer with input and output units.

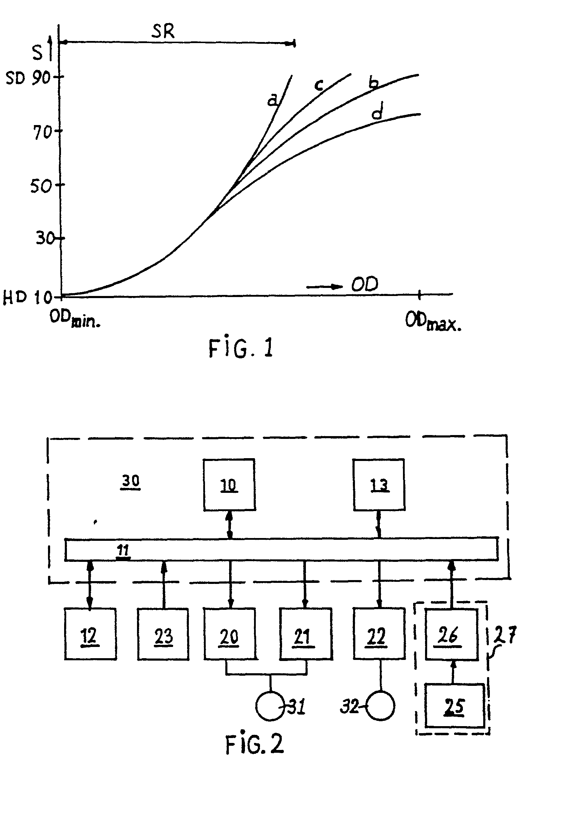

In Fig. 1 the optical density (OD) of an original is plotted along the horizontal axis. The lightest part of the original that just should be reproduced is indicated by $OD_{min.}$ and the darkest part that should be reproduced by $OD_{max.}$. SR is the basic screen range of the contact screen used. The vertical axis shows the screen dot size (S) as a percentage of the maximum screen dot size. It is generally desirable when using a positive film to reproduce the $OD_{min.}$ of the original with a screen dot size of about 10% and the $OD_{max.}$ of the original with a screen dot size of about 90%. This is indicated in Fig. 1 by HD (highlight dots) and SD (shadow dots) respectively. An imagewise main exposure through the screen theoretically yields an image having a density gradient as indicated by curve *a* in Fig. 1. The dark parts of the original are notreproduced separately, but in order to reproduce these dark parts of the original separately, a calculated non-imagewise additional exposure is given through the screen (a so-called flash exposure). The resulting image theoretically has a density gradient as indicated by curve *b*.

In the case of just an imagewise main exposure through the screen, however, the original does not yield an image with a density gradient as indicated by curve *a*, but an image with a density gradient as indicated by curve *c*. The stray light present in fact has the same effect on the density gradient of the resulting image as a non-imagewise additional exposure. Calculations for a non-imagewise additional exposure based on the theoretical curve *a* will therefore in reality yield an image with the density gradient as indicated by curve *d*. The shadow dots have been subjected to excessive exposure so that the resulting image has inadequate contrast.

The theoretical non-imagewise additional exposure time ($F_o$) can be found by means of the following formula:

$$F_o = F_B \cdot \frac{10^R - 10^{R_o}}{10^R} \qquad (1)$$

where $F_B$ is the non-imagewise additional exposure, R is the contrast range of the original and $R_o$ is the basic-screen range of the screen used.

The exposure time of the main exposure depends on a number of constant factors, such as for example imaging ratio, diaphragm, light source intensity and so on. The only variable factor in these conditions is the $OD_{min.}$ of the original in accordance with the equation:

$$M = T_{H_o} \cdot 10^{OD_{min.}} \qquad (2)$$

where M is the main exposure time and $T_{H_o}$ is the basic main exposure time. If an imagewise additional exposure without a screen is also required, the imagewise additional exposure time $T_B$ can be determined by means of the following formula:

$$T_B = T_{B_0} \cdot 10^{OD_{min.}} \times \left(1 - \frac{10^R - 1}{10^{R_0} - 1}\right) \quad (3)$$

where $T_{B_0}$ is the imagewise basic additional exposure time, $R_0$ is the basic screen range of the contact screen and R is the contrast range of the original. The total sum of the main and additional exposures must remain equal.

To obtain an accurate non-imagewise additional exposure, the theoretical quantity of additional exposure must be reduced. The corrected non-imagewise additional exposure time $F_c$ can be found according to the invention by reducing the theoretical non-imagewise additional exposure time $F_0$ by a correction factor in accordance with the following equation:

$$F_c = F_0 - f \times M \times I \times C \quad (4)$$

where M is the main exposure time, f is the dispersion factor, I is the measured intensity of the light reflected by the original during the main exposure and C is a constant. The theoretical non-imagewise additional exposure time $F_0$ and the main exposure time M are found by means of formulae 1 and 2. To this end $OD_{min.}$ and $OD_{max.}$ of an original are measured and fed into a computer.

The main exposure time is a function of $OD_{min.}$. The theoretical non-imagewise additional exposure time $F_0$ is a function of the basic screen range $R_0$ of the contact screen and of the contrast range of the original.

The constant C indicates the ratio of the effective light intensity of the additional exposure source to that of the main exposure source. The dispersion factor f is an empirical constant typical of a specific lens.

For a standard lens, f has a value of 0.03. I is a measurement of the intensity of the light reflected by the original if the original is subjected to the main exposure. For a completely white original, I=1 while for a dark original, for example, I=0.01.

The intensity I of the light reflected by the original is measured by means of a sensor comprising a photoelectric cell and so secured adjacent the lens of the reproduction camera that the image angle covered by this photoelectric cell is equivalent to the image angle of the lens.

Even with variable imaging ratios, the area of the original covered by the lens and by the photoelectric cell will remain equal as a result of this identical image angle. If an original is smaller than the area covered by the photoelectric cell, a black margin is placed around the original. The original holder can also be provided with a black platen. The measured intensity of the reflected light then relates substantially solely to the original so that the correction for the dispersion can be carried out correctly.

In a reproduction camera, a plurality of lenses with possibly different image angles are generally disposed on a rotatable or slidable lens holder. For a given required imaging ratio one lens is placed in the path of the rays of light. A photoelectric cell (with an optical system) is so disposed adjacent each lens that each photoelectric cell covers the same image angle as the associated lens. The selection means provided to place one of the lenses in the path of the rays of light also actuate the photoelectric cell associated with that lens. The dispersion factor f empirically determined for each lens is also fed to the computer for calculating the correction factor.

If the spectral sensitivity of a photoelectric cell differs from the spectral sensitivity of the light-sensitive material to be exposed, this can be corrected in known manner by means of a spectral filter for that photoelectric cell.

Fig. 2 schematically represents the computer 30 with the input and output units. Computer 30 comprises a central processing unit 10 (CPU), a bus system 11 and a memory 13. A control panel 12 is connected to the central processing unit (CPU) 10 via the bus system 11. All kinds of data such as, for example, imaging ratio, sensitivity of the light-sensitive material, and basic screen range of the contact screen, are fed to the computer 30 via a keyboard on the control panel 12. Other data, such as for example the aperture of the diaphragm or the lens disposed in the path of the rays of light, are detected by a sensor at the relevant place and also fed to the computer 30. The data concerning the $OD_{min.}$ and $OD_{max.}$ of the original are automatically fed into the computer 30 by means of a light meter 23. If a non-automatic light meter is used, the $OD_{min.}$ and $OD_{max.}$ values read off therefrom can be fed in via the keyboard on the control panel 12. By means of the formulae stored in memory 13 the computer 30 then calculates the main exposure time M, the theoretical non-imagewise additional exposure time $F_0$ and, if necessary, the additional exposure time $T_B$ for an imagewise additional exposure without a screen.

Computer 30 contains the central processing unit 10 which consists of a control unit, a unit which performs logic operations on binary signals, the so-called ALU (Arithmetic Logic Unit) and various auxiliaries such as registers, clock signal generators, buffers, signal drivers, and so on. This central processing unit 10 draws data and coded instructions from memory 13, decodes them, and then performs the decoded instructions. The signals corresponding to the instructions performed are available on the bus system 11.

During a test exposure with the main exposure lamps, photoelectric cell 25 of sensor 27 delivers a signal to the A/D converter 26. At the output of this A/D converter a sensor signal is generated which is proportional to the intensity of the light reflected by the original. This sensor signal is fed to the computer 30.

Using the data of the calculated main exposure time M, the dispersion factor f associated with the lens used as obtained from a table in memory 13, and the sensor signal proportional to the intensity I of the light reflected by the signal, the computer determines a correction factor which is proportional to the product of the said factors.

To obtain a corrected non-imagewise additional

exposure time $F_c$ the theoretical non-imagewise additional exposure time $F_o$ is reduced by the correction factor.

The corrected non-imagewise additional exposure time is fed to control means 22 as a combination of binary signals. A binary counter in control means 22 is set by means of these binary signals. During the exposure cycle, clock pulses are fed at a fixed frequency to the counter and a lamp switching relay is actuated for the additional exposure lamp 32.

If the number of clock pulses agrees with the pre-set number in the counter, this counter stops and the lamp switching relay for lamp 32 drops so that the non-imagewise additional exposure through the screen is automatically terminated at the correct time.

The main exposure lamp 31 is switched on by means of control means 20 during the main exposure time and, if necessary, the same main exposure lamp 31 is switched on by the control means 21 during the exposure time for the imagewise additional exposure without the screen.

The invention is not restricted to the embodiment described. Other embodiments are possible. For example, the photoelectric cell of the sensor can be disposed in the lens itself. Another possible way of measuring the light reflected by the original is a semi-transparent mirror disposed between the lens and the film holder to reflect the light to the photoelectric cell.

A photoelectric cell adjacent the lens can also be used as a control means for the main exposure.

To this end an integrator is coupled to the photoelectric cell and measures the total reflected light during the exposure and switches off the main exposure if the integrator output signal exceeds a preset value. This integrated light quantity is equivalent to the product of the main exposure time M and the light reflected by the original from formula 4, so that this product can be fed as one number into the computer 30.

The correction factor or the corrected non-imagewise additional exposure time can be displayed on a display on control panel 12.

The lamp switching relay for lamp 32 can also be controlled directly by the central processing unit 10. This CPU 10 then operates as a time switch and the time during which the lamp 32 is switched on depends, for example, on the number of times that the processor runs through a given programme cycle of known duration. That number of times is related to the calculated corrected non-imagewise additional exposure time and is therefore dependent upon the correction factor.

## Claims

1. A reproduction camera for the production of contact screen prints from an original, said camera being provided with a platen for a contact screen and a light-sensitive material, an optical system for projecting an image of the original onto the light-sensitive material, means for exposing the light-sensitive material, the exposure consisting at least of an imagewise main exposure through the contact screen and a non-imagewise additional exposure through the contact screen, and a computer (30) which determines a dosage for the various exposures, characterized in that a sensor (27) is provided and generates a signal proportional to the light reflected by the original as a whole, and in that the computer (30) is connected to the sensor and comprises means which convert the sensor signal into a second signal used to influence the non-imagewise additional exposure through the contact screen to compensate for stray light.

2. A reproduction camera according to claim 1, characterized in that the second signal is used to influence the exposure time of the non-imagewise additional exposure through the contact screen.

3. A reproduction camera according to claim 1 or 2, characterized in that the exposure time of the non-imagewise additional exposure through the contact screen, influenced by the second signal, is equivalent to the difference between the theoretical non-imagewise additional exposure time and a correction factor proportional to the product of the dispersion factor of the optical system, the main exposure time and the intensity of the light reflected by the original during the main exposure.

## Patentansprüche

1. Reproduktionskamera zur Herstellung von Kontaktrasterabdrücken von einem Original, welche Kamera mit einer Platte für einen Kontaktraster und ein lichtempfindliches Material versehen ist, einem optischen System zur Projektierung eines Bildes des Originals auf das lichtempfindliche Material, Mitteln zum Exponieren des lichtempfindlichen Materials, wobei die Exponierung zumindest eine bildmässige Hauptexponierung durch den Kontaktraster und eine nicht bildmässige Extraexponierung durch den Kontaktraster umfasst, und einen Computer (30), welcher eine Dosierung für die verschiedenen Exponierungen festsetzt, dadurch gekennzeichnet, dass ein Sensor (27) vorgesehen ist, der ein dem vom Original als Ganzes reflektiertem Licht entsprechendes Signal erzeugt, und dass der Computer (30) an den Sensor angeschlossen ist und Mittel zum Umwandeln des Sensorsignals in ein zweites Signal umfasst, welches dazu dient auf die nicht bildmässige Extraexponierung durch den Kontaktraster einzuwirken und Streulicht auszugleichen.

2. Reproduktionskamera nach Anspruch 1, dadurch gekennzeichnet, dass das zweite Signal zur Beeinflussung der Exponierungszeit der nicht bildmässigen Extraexponierung durch den Kontaktraster benutzt wird.

3. Reproduktionskamera nach Anspruch 1 oder 2, dadurch gekennzeichnet, dass die Exponierungszeit der durch das zweite Signal beeinflussten nicht bildmässigen Extraexponierung durch den Kontaktraster dem Unterschied zwischen der theoretischen nicht bildmässigen zusätzlichen Exponierungszeit und einem Korrekturfaktor im Verhältnis zu dem Produkt des Zerstreuungsfaktors des optischen Systems, der Hauptexponierungszeit und der Intensität des vom Original während der Hauptexponierung reflektierten Lichtes entspricht.

**Revendications**

1. Caméra de reproduction pour la production par contact de copies de clichés tramés à partir d'un original, cette caméra comprenant une platine pour une trame de contact et un matériau photosensible, un système optique pour la production d'une image de l'original sur le matériau photosensible, des moyens pour l'exposition du matériau photosensible, l'exposition consistant au moins en une exposition principale relative à l'image à travers la trame de contact et une exposition supplémentaire non-relative à l'image à travers la trame de contact, et un ordinateur (30) qui détermine un dosage pour les différentes expositions, caractérisée en ce qu'elle comprend un capteur qui produit un signal proportionnel à la lumière reflétée dans l'ensemble par l'original, et en ce que l'ordinateur (30) est branché au capteur et comprend des moyens qui convertissent le signal du capteur en un deuxième signal utilisé pour influencer l'exposition supplémentaire non-relative à l'image à travers la trame de contact pour compenser la lumière de diffusion.

2. Caméra de reproduction selon la revendication 1, caractérisée en ce que le deuxième signal est utilisé pour influencer la durée d'exposition de l'exposition supplémentaire non-relative à l'image à travers la trame de contact.

3. Caméra de reproduction selon la revendication 1 ou 2, caractérisée en ce que la durée d'exposition de l'exposition supplémentaire non-relative à l'image à travers la trame de contact, influencée par le deuxième signal, est égale à la différence entre la durée théorique de l'exposition supplémentaire non-relative à l'image et un facteur de correction proportionnel au produit du facteur de dispersion du système optique, de la durée de l'exposition principale et de l'intensité de la lumière reflétée par l'original pendant l'exposition principale.

FIG. 1

FIG. 2

1